# FASCICULE DE BREVET EUROPEEN

(11) **EP 0 480 838 B1**
(45) Date de publication et mention de la délivrance du brevet: **02.11.1994**
(21) Numéro de dépôt: 91402712.3
(22) Date de dépôt: 10.10.1991
(51) Int. Cl.: F16L 5/02, H02G 3/08, B60R 13/08, B60R 13/07

(54) **Garniture étanche de passage de conduits tubulaires souples au travers d'une ouverture d'un corps creux de véhicule automobile**
Dichtgarnitur zum Durchführen von Schlauchleitungen durch eine Öffnung eines Hohlkörpers in einem Fahrzeug
Sealing grommet for passing flexible conduits through an opening of a hollow body in an automobile

(30) Priorité: 12.10.1990 FR 9012644
(43) Date de publication de la demande: 15.04.1992
(73) Titulaire: AUTOMOBILES PEUGEOT, 75116 Paris (FR); AUTOMOBILES CITROEN, 92200 Neuilly-sur-Seine (FR)
(72) Inventeur: Simond, Roland, F-78280 Guyancourt (FR)
(74) Mandataire: Berger, Helmut

(56) Documents cités:
- DE-U- 8 428 401
- FR-A- 1 120 707
- US-A- 3 263 700

## Description

La présente invention se rapporte à une garniture étanche pour une ouverture pratiquée dans une paroi d'un corps creux de véhicule automobile et permettant le passage au travers de la paroi d'au moins un conduit tubulaire souple tel que, par exemple, un conducteur électrique.

On connaît depuis longtemps des garnitures en matière élastique qui sont montées de façon étanche dans une ouverture pratiquée dans une paroi d'un corps creux de véhicule automobile et qui comportent des trous pour le passage de conducteurs électriques auquels on désire faire traverser la paroi. Les conducteurs électriques sont montés serrés dans les trous de passage, afin d'obtenir un engagement étanche de ceux-ci dans la garniture. De plus, ces garnitures participent au positionnement des conducteurs, tout en améliorant la finition du véhicule.

Toutefois, de telles garnitures empêchent l'évacuation de l'eau qui s'introduit dans le corps creux, lors, par exemple d'un lavage du véhicule, d'une averse ou encore par condensation.

C'est pourquoi, on a prévu des garnitures munies d'un orifice d'écoulement, grâce auquel on peut éviter l'accumulation d'eau dans le corps creux.

Cependant, avec un tel orifice d'écoulement, la garniture n'est plus étanche et laisse pénétrer les gaz, les odeurs extérieures et les bruits dans l'habitacle du véhicule, ce qui nuit au confort des passagers du véhicule.

L'invention a pour but de résoudre ces inconvénients, en proposant une garniture qui permette l'évacuation de l'eau s'accumulant dans le corps creux et qui empêche l'entrée dans l'habitacle des gaz, des odeurs extérieures et des bruits qui nuisent au confort des passagers. En outre, l'invention a pour but de proposer une garniture qui est peu coûteuse à réaliser et dont le montage est rapide et aisé.

A cet effet, la présente invention a pour objet une garniture pour une ouverture pratiquée dans une paroi d'un corps creux de véhicule automobile et permettant le passage au travers de la paroi d'au moins un conduit tubulaire souple, tel que par exemple un conducteur électrique, et du type comportant au moins un trou de passage du conduit, une rainure périphérique et apte à coopérer avec un rebord interne de l'ouverture pour un montage étanche de la garniture sur la paroi, et un orifice d'écoulement d'eau qui débouche sur chacune des faces de la garniture, cette garniture étant caractérisée en ce que l'orifice d'écoulement est muni d'un moyen d'obturation unidirectionnel formant chicane d'isolation sonore de sorte que l'orifice ne s'ouvre que pour l'évacuation de l'eau hors du corps creux.

L'invention est encore caractérisée en ce que le moyen d'obturation unidirectionnel est constitué par un clapet souple apte à venir en appui, dans sa position normalement fermée, contre une extrêmité débouchante de l'orifice qui est située à l'extérieur du corps creux, ledit orifice ayant la forme d'un puits d'une profondeur d'au moins un centimètre, de façon que le clapet s'ouvre que si la pression exercée par l'eau accumulée dans le corps creux est supérieure à une valeur prédéterminée.

De plus, l'invention est encore caractérisée en ce que le clapet souple a la forme d'une languette raccordée à la garniture à l'aide d'un lien élastique lié à la garniture, et comporte à son extrémité libre une portée sphérique disposée au regard d'une surface creuse et tronconique qui constitue l'une des extrémités débouchantes de l'orifice.

La garniture conforme à l'invention se caractérise encore en ce que le clapet souple comporte, sur sa face au regard de l'orifice d'écoulement précité, un doigt porté par la languette et présentant à son extrémité libre une sphère pouvant se clipper dans un perçage de la garniture, pour exercer sur le clapet souple une force ayant tendance à le maintenir en position fermée.

On précisera encore ici que la garniture comporte une fente transversale débouchant sur chaque face de la garniture et s'étendant, depuis la périphérie de celle-ci suivant une ligne passant par le centre du trou de perçage précité, ladite fente permettant de déformer la périphérie de la garniture, pour faciliter son montage.

La garniture est encore caractérisée en ce que la fente transversale forme dans la garniture deux lèvres qui ont chacune un profil apte à s'emboîter l'un dans l'autre, lorsque la garniture est montée dans l'ouverture, de façon à assurer l'étanchéité de la fente.

On précisera encore ici que l'une des lèvres a un profil en forme d'arête qui s'étend suivant la direction longitudinale de la fente, et l'autre lèvre a un profil en forme de rainure.

On notera encore ici qu'au moins un trou de passage pour un conduit souple peut être obturé à l'aide d'une rotule liée à la garniture et formée à l'extrémité d'une tige élastique venue du moulage, ladite rotule pouvant se clipper de façon étanche dans le trou à obturer.

Mais, d'autres avantages et caractéristiques de l'invention apparaîtront mieux dans la description détaillée qui suit et se réfère aux dessins annexés, donnés uniquement à titre d'exemple et dans lesquels .
- La figure 1 est une vue en coupe transversale d'un corps creux de véhicule automobile dans lequel est montée une garniture de passage de conduits souples tubulaires, conforme à l'invention.
- La figure 2 est une vue en élévation de côté de la garniture visible sur la figure 1.
- La figure 3 est une vue en élévation et de face de la garniture conforme à l'invention.
- La figure 4 est une vue de dessus et suivant la flèche IV de la figure 2, de la garniture conforme à l'invention.
- La figure 5 est une section suivant la ligne V-V de la figure 4.
- Les figures 6 et 7 sont des vues partielles et en section suivant la ligne VI-VI de la figure 4 qui représentent le clapet souple conforme à l'invention, en position ouverte et fermée, respectivement.
- La figure 8 est une vue partielle et en section suivant la ligne VIII-VIII de la figure 4, et qui illustre le profil des lèvres de la fente transversale de la garniture conforme à l'invention.

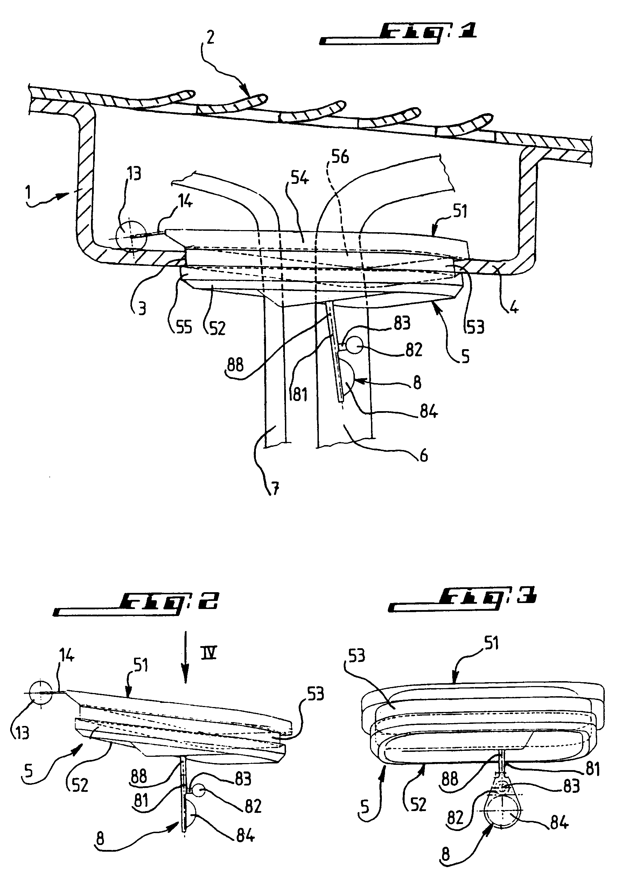

En se reportant tout d'abord à la figure 1, on voit qu'un corps creux 1, tel qu'un auvent de la carosserie d'un véhicule automobile, comporte d'une part une grille d'aération 2 et d'autre part, une ouverture 3 réalisée dans une paroi 4 opposée à la grille 2 et permettant le montage d'une garniture 5 en matériau élastique.

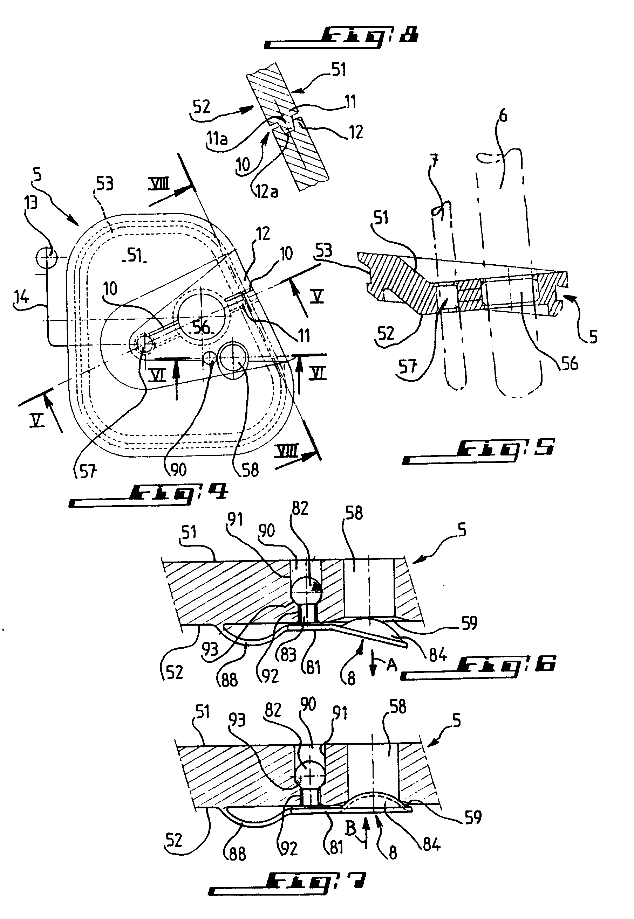

Sur les figures 1 à 4, on voit bien que la garniture 5 est de forme applatie et présente une face 51 dite intérieure, disposée au regard de l'intérieur du corps creux 1 et une face 52 dite extérieure, opposée à la face 51. La garniture 5 a des faces 51 et 52 de forme trapézoïdale avec des angles arrondis, et constitue ainsi un bouchon d'obturation de l'ouverture 3 de la paroi 4, qui présente une forme correspondante.

La garniture 5 est montée dans l'ouverture trapézoïdale 3 à l'aide d'une rainure périphérique 53 qui épouse, en position de montage de la garniture 5, le rebord interne de l'ouverture 3. De part et d'autre de la rainure périphérique 53 font saillie des épaulements périphériques 54 et 55 qui s'étendent respectivement jusqu'aux faces 51 et 52 de la garniture 5. On comprend déjà qu'avec une telle rainure 53, la garniture 5 est montée de façon étanche et par clippage sur la paroi 4.

Suivant l'exemple illustré, la garniture 5 comporte deux trous de passage repérés en 56 et 57. Ces trous permettent le passage de conduits tubulaires souples, tels que les conducteurs électriques 6 et 7 visibles sur la figure 1, au travers de la garniture 5, et par conséquent au travers de l'ouverture 3 de la paroi 4. Les conducteurs électriques 6 et 7 sont engagés sans jeu dans les trous 56 et 57 respectivement, pour que ces derniers soient obturés de façon étanche par les conducteurs.

Sur la figure 4, on remarque également que la garniture 5 comporte un orifice 58, qui débouche sur chaque face 51 et 52 de la garniture, de sorte que l'eau ayant pénétré dans le corps creux 1, par exemple en traversant la grille 2, puisse s'écouler hors du corps creux.

Conformément à l'invention, l'orifice d'écoulement 58 a la forme d'un puits de section circulaire, et dont une extrémité qui débouche dans la face 52 présente une surface creuse et tronconique 59.

En se reportant plus particulièrement aux figures 6 et 7, on voit que l'orifice d'écoulement 58 est muni d'un moyen d'obturation de référence générale 8.

Le moyen d'obturation 8 est constitué par une languette 81 venue de moulage avec la garniture 5 et raccordée à cette dernière par un lien élastique 88. Sur les figures 6 et 7, on voit que la languette 81 comporte un doigt 83. Le doigt 83 s'étend sur une direction normale à la languette 81 et présente à son extrémité libre une sphère 82 de diamètre supérieur à celui du doigt 83. La sphère 82 est logée par clippage dans un perçage 90 qui est constitué par une partie 91 de diamètre sensiblement égal à celui de la sphère 82 et débouchant à la face 51 de la garniture 5, et une partie 92 de diamètre inférieur à celui de la sphère 82 et débouchant à la face 52. Les parties 91 et 92 de grand et petit diamètres sont raccordées l'une à l'autre par une partie tronconique 93, qui fait office de portée d'appui pour la sphère 82, lorsque celle-ci est clippée dans le perçage 90. On comprend donc que la sphère 82 qui est clippée dans le perçage 90 permet d'appliquer à la languette souple 81 une force ayant tendance à la maintenir contre la face 52 de la garniture, par conséquent, contre l'orifice d'évacuation 58.

La languette 81 comporte à son extrémité libre une portée sphérique 84, disposée au regard de la surface tronconique 59, lorsque la sphère 82 est clippée dans le perçage 90. Cette languette 81 agit comme un moyen d'obturation unidirectionnel ayant la forme d'un clapet et venant en appui par sa portée sphérique 84, dans sa position normalement fermée, contre la surface tronconique 59 de l'orifice 58, de sorte que ce dernier n'est ouvert que pour permettre un écoulement d'eau dans le sens de l'évacuation de celle-ci hors du corps creux 1. Il va de soi qu'avec une telle languette souple 81 plaquée dans sa position normalement fermée contre l'orifice 58, les bruits, gaz et odeurs extérieurs sont empêchés de passer dans l'ouverture 3. La languette 81 agit par conséquent comme une chicane d'isolation notamment sonore.

Il convient de noter ici que, conformément à l'invention, l'orifice d'écoulement ou puits 58 présente une profondeur d'au moins 1 centimètre entre ses deux extrémités débouchant sur les faces 51 et 52 de la garniture 5.

Une telle hauteur est nécessaire pour permettre l'ouverture du clapet 8, à l'encontre de l'effort exercé par la sphère 82 lorsqu'elle est clippée dans le perçage 90, sous l'effet de la pression exercée par l'eau accumulée dans le puits 58, et donc dans le corps creux 1.

Le fonctionnement du clapet 8 est le suivant. Lorsque la garniture 5 est montée dans l'ouverture 3, comme on le voit bien sur la figure 1, et que la languette 81 est en position fermée avec la portée sphérique 84 en appui contre la surface creuse et tronconique 59 de l'orifice d'écoulement 58, comme visible sur la figure 7, de l'eau peut s'accumuler dans le corps creux 1. Si l'accumulation d'eau dans le corps creux 1 est suffisante pour remplir le puits formé par l'orifice d'écoulement 58, cette eau accumulée exerce sur le clapet souple une pression supérieure à une pression prédéterminée permettant le décollement de ce dernier par rapport à la surface 59 et suivant la direction indiquée par la flèche A sur la figure 6. Ce décollement du clapet 8 entraîne l'ouverture de l'orifice d'écoulement 58, qui laisse ainsi passer l'eau qui s'était accumulée dans le corps creux 1. Lorsque l'eau a été évacuée, et que le corps creux 1 et l'orifice d'écoulement ou puits 58 sont vides, l'ensemble formé par le doigt 83 et la sphère 82 exerce sur l'extrémité libre de la languette 81 un effort orienté suivant la flèche B sur la figure 7 qui rappelle le clapet 8 dans sa position fermée. On notera ici que de manière inverse, si des gaz, des projections d'eau ou de corps quelconques tels que des graviers ou du sable tentent de s'immiscer par l'orifice 58 dans le corps creux 1, ceux-ci vont venir heurter la languette 81 ce qui va augmenter la pression de la portée sphérique 84 sur la surface conique 59 interdisant leur introduction dans le corps creux 1.

En se reportant plus particulièrement aux figures 4 et 8, d'autres caractéristiques de la garniture conforme à l'invention vont être expliquées. Sur la figure 4, on remarque que la garniture 5 comporte une fente transversale 10 qui débouche sur chaque face 51, 52 de la garniture. Cette fente transversale 10 s'étend depuis la périphérie de la garniture et suivant une ligne droite illustrée par le trait en pointillés V-V visible sur la figure 4. La fente 10 est formée de façon à traverser les trous de passage 56 et 57 par leur centre, et s'étend depuis le rebord périphérique de la garniture 5 qui est le plus proche du trou de passage 56 jusqu'au trou de passage 57. Comme on le voit sur la figure 8, la fente 10 présente, en section transversale, deux lèvres repérées en 11 et 12 et disposées l'une au regard de l'autre. Les deux lèvres 11 et 12 de la fente 10 ont des profils aptes à permettre leur emboîtement l'un dans l'autre, lorsque la garniture est montée sur la paroi 4, de façon à assurer l'étanchéité de la fente. Conformément à l'exemple illustré, la lèvre 11 a un profil en forme d'arête 11a qui s'étend suivant la direction longitudinale de la fente 10, et l'autre lèvre repérée en 12 a un profil en forme de rainure 12a. Avec une telle fente 10, il est possible de déformer la périphérie de la garniture 5 pour engager la rainure périphérique 53 avec le rebord interne de l'ouverture 3 en suivant le contour de ce rebord interne, ce qui rend le montage de la garniture rapide et aisé sans l'utilisation d'outils. Une fois que la rainure périphérique 53 est complètement appliquée contre le rebord de l'ouverture 3, les lèvres 11 et 12 de la fente 10 peuvent revenir au regard l'une de l'autre, de façon que l'arête 11a qui s'étend longitudinalement à la fente 10 vienne se loger dans la rainure 12a correspondante.

On remarque également sur les figures que la garniture 5 est munie d'une rotule 13. La rotule 13 est raccordée à la garniture 5 à l'aide d'une tige élastique 14. La rotule 13 et la tige élastique 14 sont venues de moulage avec la garniture 5. Conformément à l'invention, la rotule 13 peut venir se clipper de façon étanche dans le trou de passage 57 pour ainsi obturer ce dernier. La fermeture du trou de passage 57 peut s'avérer nécessaire dans les modèles de véhicules où le conduit souple 7 n'a pas été prévu.

On a donc obtenu conformément à l'invention une garniture qui permet l'évacuation de l'eau s'accumulant dans le corps creux, et qui empêche l'entrée, par exemple dans l'habitacle, des gaz, des odeurs extérieures et des bruits qui nuisent au confort des passagers.

De plus, le lien élastique 88 du clapet 8 et la tige élastique 14 qui raccorde la rotule 13 à la garniture 5 permettent d'obtenir une garniture monobloc, de forme simple et peu coûteuse à réaliser. Un autre avantage de la garniture proposée par l'invention est qu'elle permet d'éviter la perte des parties annexes de la garniture telles que le clapet ou la rotule d'obturation, ce qui simplifie l'opération d'approvisionnement en garnitures, lors du montage en usine de celles-ci sur la caisse de véhicules.

Comme on l'a dit plus haut, la fente transversale permet également d'obtenir une garniture dont le montage est rapide et aisé.

Bien entendu, l'invention n'est nullement limitée au mode de réalisation décrit et illustré qui n'a été donné qu'à titre d'exemple.

## Revendications

1. Garniture pour une ouverture pratiquée dans une paroi d'un corps creux de véhicule automobile et permettant le passage au travers de la paroi d'au moins un conduit tubulaire souple tel que par exemple un conducteur électrique, et du type comportant au moins un trou pour un passage étanche du conduit, une rainure périphérique et apte à coopérer avec un rebord interne de l'ouverture, pour un montage étanche sur la paroi, et un orifice d'écoulement d'eau qui débouche sur chacune des faces de la garniture, caractérisée en ce que l'orifice d'écoulement (58) est muni d'un moyen d'obturation unidirectionnel (8) constitué par un clapet souple et apte pour venir en appui pour faire obstacle aux bruits, dans sa position fermée, contre une extrémité débouchante (59) de l'orifice (58) qui est située à l'extérieur du corps creux (1), ledit orifice (58) ayant la forme d'un puits d'une profondeur d'au moins 1 centimètre, de façon que le clapet ne s'ouvre pour laisser l'eau s'écouler du corps creux (1), que si la pression exercée par l'eau accumulée dans ce dernier (1) est supérieure à une valeur prédéterminée.

2. Garniture selon la revendication 1, caractérisée en ce que le clapet souple (8) a la forme d'une languette (81) raccordée à la garniture (5) à l'aide d'un lien élastique (88) lié à la garniture, et comporte à son extrémité libre une portée sphérique (84), disposée au regard d'une surface creuse et tronconique (59) qui constitue l'une des extrémités débouchantes de l'orifice précité.

3. Garniture selon l'une des revendications 1 ou 2, caractérisée en ce que le clapet souple (8) comporte sur sa face au regard de l'orifice d'écoulement précité un doigt (83) porté par la languette (81) et présentant à son extrémité libre une sphère (82) pouvant se clipper dans un perçage (90) de la garniture (5), pour exercer sur le clapet souple (8) une force ayant tendance à le maintenir en position fermée.

4. Garniture selon l'une des revendications 1 à 3, caractérisée en ce qu'elle comporte une fente transversale (10) débouchant sur chaque face (51, 52) de la garniture (5) et s'étendant depuis la périphérie de -celle-ci, suivant une ligne passant par le centre de chaque trou de passage (56, 57) précité, ladite fente permettant de déformer la périphérie de la garniture (5) pour faciliter son montage.

5. Garniture selon l'une des revendications 1 à 4, caractérisée en ce que la fente transversale (10) forme dans la garniture (5) deux lèvres (11, 12) qui ont chacune un profil apte à s'emboîter l'un dans l'autre lorsque la garniture (5) est montée dans l'ouverture (3), de façon à assurer l'étanchéité de la fente (10).

6. Garniture selon l'une des revendications 1 à 5, caractérisée en ce que l'une (11) des lèvres a un profil en forme d'arête (11a) qui s'étend suivant la direction longitudinale de la fente (10), et l'autre lèvre (12) a un profil en forme de rainure (12a).

7. Garniture selon l'une des revendications 1 à 6, caractérisée en ce qu'au moins un trou de passage (56, 57) d'un conduit souple (6, 7) peut être obturé à l'aide d'une rotule (13) liée à la garniture et formée à l'extrémité d'une tige élastique (14), ladite rotule (13) pouvant venir se clipper de façon étanche dans le trou de passage (57) à obturer.

## Claims

1. Grommet for an opening formed in a wall of a hollow body of an automotive vehicle and permitting the passage through the wall of at least one flexible tubular duct such for example as an electric conductor and of the type comprising at least one hole for a fluid-tight passage of the duct, a peripheral groove and adapted to co-operate with an internal ledge of the opening for a sealed mounting onto the wall and an opening for water flow which opens onto each one of the faces of the grommet, characterized in that the flow opening (58) is provided with a means (8) for a unidirectional closure constituted by a flexible valve and adapted to be caused to bear in order to form an obstacle to noises in its closed position upon the opening end (59) of the opening (58) which is located outside of the hollow body (1), the said opening (58) having the shape of a well with a depth of at least 1 centimetre so that the valve opens to let the water flow from the hollow body (1) only when the pressure exerted by the accumulated water within the latter (1) is higher than a predetermined value.

2. Grommet according to claim 1, characterized in that the flexible valve (8) has the shape of a tongue (81) connected to the grommet (5) with the assistance of an elastic tie (88) connected to the grommet and comprises at its free end a spherical portion (84) disposed in front of a hollow and frusto-conical surface (59) which constitutes one of the opening ends of the aforesaid opening.

3. Grommet according to one of claims 1 or 2, characterized in that the flexible valve (8) comprises on its face in front of the aforesaid flow opening, a finger (83) carried by the tongue (81) and exhibiting at its free end a sphere (82) which may be clipped into a bore (90) of the grommet (5) to exert upon the flexible valve (8) a force having a tendency to keep it in the closed position.

4. Grommet according to one of claims 1 to 3, characterized in that it comprises a transverse slot (10) opening onto each face (51, 52) of the grommet (5) and extending from the periphery thereof along a line passing through the center of each aforesaid passageway hole (56, 57), the said slot permitting to deform the periphery of the grommet (5) to facilitate its mounting.

5. Grommet according to one of claims 1 to 4, characterized in that the transverse slot (10) forms in the grommet (5) two lips (11, 12) which have each one a profile adapted to fit into each other when the grommet (5) is mounted into the opening (3) so as to ensure the fluid-tightness of the slot (10).

6. Grommet according to one of claims 1 to 5, characterized in that one (11) of the lips has an edge-shaped profile (11a) which extends along the longitudinal direction of the slot (10) and the other lip (12) has a groove-shaped profile (12a).

7. Grommet according to one of claims 1 to 6, characterized in that at least one passageway hole (56, 57) of a flexible duct (6, 7) may be closed with the assistance of a ball member (13) connected to the grommet and formed at the end of an elastic rod (14), the said ball member (13) being adapted to clip itself in sealing relationship into the passageway hole (57) to be closed.

## Patentansprüche

1. Einsatz für eine in einer Wand eines hohen Körpers eines Kraftfahrzeugs gebildete und das Durchführen durch die Wand hindurch von wenigstens einer nachgiebiegen rohrförmigen Leitung, wie z.B. eines elektrischen Leiters gestattende Öffnung und derjenigen Gattung, mit wenigstens einem Loch zum dichten Durchführen der Leitung, einer Umfangsnut, die fähig ist, mit einem inneren Flansch der Öffnung für die dichte Anordnung an der Wand zusammenzuwirken und einer Wasserabflussöffnung, die an jeder der Seiten des Einsatzes mündet, dadurch gekennzeichnet, dass die Abflussöffnung (58) mit einem durch ein nachgiebiges Ventil gebildetes Einrichtungsverschlussmittel (8) versehen ist, welches Ventil geeignet ist, in seiner geschlossenen Stellung in Abstützung desjenigen ausmündenen Endes (59) der Öffnung (58), das ausserhalb des hohen Körpers (1) gelegen ist, zu kommen, um ein Hindernis für die Geräusche zu bilden, wobei die besagte Öffnung (58) die Gestalt eines Schachtes mit einer Tiefe von wenigstens 1 Zentimeter hat, damit das Ventil sich nur dann öffnet, um das Wasser aus dem hohlen Körper (1) abfliessen zu lassen, wenn der durch das in demselben (1) angesammelte Wasser ausgeübte Druck grösser als ein vorbestimmter Wert ist.

2. Einsatz nach Anspruch 1, dadurch gekennzeichnet, dass das nachgiebige Ventil (8) die Gestalt einer mit dem Einsatz (5) mit Hilfe eines mit dem Einsatz verbundenen elastischen Verbindungsteiles (88) verbundenen Zunge (81) hat und an seinem freien Ende eine einer hohlen und kegelstumpfförmigen Fläche (59) gegenüberliegende spherische Auflagefläche (84) aufweist, welche hohle und kegelstumpfförmige Fläche das eine der ausmündenden Enden der vorgenannten Öffnung bildet.

3. Einsatz nach einem der Ansprüche 1 oder 2, dadurch gekennzeichnet, dass das nachgiebige Ventil (8) an seiner der vorgenannten Abflussöffnung gegenüberliegenden Fläche einen durch die Zunge (81) getragenen Finger (83) aufweist, der an seinem freien Ende eine Kugel (82) aufweist, die sich in einer Bohrung (90) des Einsatzes (5) einklemmen kann, um auf das nachgiebige Ventil (8) eine Kraft, die dazu neigt, es in der geschlossenen Stellung zu halten, auszuüben.

4. Einsatz nach einem der Ansprüche 1 bis 3, dadurch gekennzeichnet, dass er einen an jeder Fläche (51, 52) des Einsatzes (5) ausmündenden Querschlitz (10) aufweist, der von dem Umfang ab entlang einer durch den Mittelpunktjedes vorgenannten Durchlassloches (56, 57) führenden Linie verläuft, wobei der besagte Schlitz es gestattet, den Umfang des Einsatzes (5) zu verformen, um seinen Einbau zu erleichtern.

5. Einsatz nach einem der Ansprüche 1 bis 4, dadurch gekennzeichnet, dass der Querschlitz (10) in dem Einsatz (5) zwei Lippen (11, 12) bildet, die jeweils ein Profil haben, mit welchem sie fähig sind, sich ineinander zu fügen, wenn der Einsatz (5) in der Öffnung (3) angeordnet ist, um das Abdichten dieses Schlitzes (10) zu gewährleisten.

6. Einsatz nach einem der Ansprüche 1 bis 5, dadurch gekennzeichnet, dass die eine (11) der Lippen ein kantenförmiges Profil (11a) hat, das sich in der Längsrichtung des Schlitzes (10) erstreckt und die andere Lippe (12) ein nutenförmiges Profil (12a) hat.

7. Einsatz nach einem der Ansprüche 1 bis 6, dadurch gekennzeichnet, dass wenigstens eine Öffnung (56, 57) für die Durchführung einer nachgiebiegen Leitung (6, 7) mit Hilfe eines mit dem Einsatz verbundenen und durch das Ende eines elastischen Stabes (14) gebildeten Kugelgliedes (13) verschlossen werden kann, wobei das besagte Kugelglied (13) sich in abdichtender Weise in der zu verschliessenden Durchlassöffnung (57) einklemmen kann.
